# EUROPÄISCHE PATENTSCHRIFT

(11) **EP 0 423 460 B1**
(45) Veröffentlichungstag und Bekanntmachung des Hinweises auf die Patenterteilung: **19.01.1994**
(21) Anmeldenummer: 90115987.1
(22) Anmeldetag: 21.08.1990
(51) Int. Cl.: F16B 13/06

(54) **Spreizdübel**
Expansible dowel
Cheville expansible

(30) Priorität: 17.10.1989 DE 3934534
(43) Veröffentlichungstag der Anmeldung: 24.04.1991
(73) Patentinhaber: "TOGE-DÜBEL" A. Gerhard GmbH, D-90431 Nürnberg (DE)
(72) Erfinder: Gerhard, Anton, D-8500 Nürnberg 80 (DE)
(74) Vertreter: Rau, Manfred, Dr. Dipl.-Ing.

(56) Entgegenhaltungen:
- DE-A- 2 711 845
- DE-A- 3 145 319
- DE-A- 3 601 598

## Beschreibung

Die Erfindung betrifft einen Spreizdübel nach dem Oberbegriff des Anspruches 1.

Bei einem derartigen aus der DE-A-31 45 319 bekannten Spreizdübel besteht der Spreizkonus aus Zink-Druckguß. Derartige Spreiz-Konen aus Druckguß sind verhältnismäßig schwer und erfordern einen entsprechend hohen Materialeinsatz. In technischer Hinsicht sind diese Spreiz-Konen zufriedenstellend und haben sich daher in der Praxis allgemein durchgesetzt.

Es ist zwar bereits bekannt geworden, die Spreizkonen aus Kunststoff bei im wesentlichen unveränderter Form herzustellen; diese Konen haben sich aber nicht durchgesetzt. die die Scherfestigkeit des Innengewindes für die Spreiz-Schraube nicht ausreichend hoch ist.

Aus der DE-A-27 11 845 ist bereits ein Dübel bekannt, der aus mehreren äußeren Spannbacken besteht, in denen ein mit Vorsprüngen versehener Dübelkern zum Auseinanderspreizen dieser Spannbacken angeordnet ist. In dieser Vorveröffentlichung ist unspezifisch ausgeführt, daß auch dieser Dübelkern aus einem zylinderförmig gerollten Blech mit entsprechend ausgestanzten Vertiefungen bestehen könne. Zur Aufnahme der von einer Spreizschraube aufzubringenden Spreizkraft ist in den Dübelkern eine Sechskant-Mutter eingesetzt. Weitere Hinweise sind dieser Veröffentlichung nicht zu entnehmen.

Aus der DE-A-36 01 598 ist ein Dübel bekannt, der aus einem massiven Bolzen mit angeformtem massivem Spreiz-Konus und einer auf dem Bolzen angeordneten Spreizhülse besteht. Die Spreizhülse besteht aus zwei aus Blech geformten Halbschalen, die in ihrem dem Konus zugewandten Spreizbereich durch zwei diametral einander gegenüberliegende in Längsrichtung verlaufende Schlitze voneinander getrennt sind, so daß die Spreizhülse in diesem Bereich beim Einziehen des Konus in die Spreizhülse aufspreizen kann. In einem sich anschließenden zylindrischen, nicht zu spreizenden Bereich der Spreizhülse sind die beiden Halbschalen mittels formschlüssig ineinandergreifender Lappen miteinander verbunden.

Der Erfindung liegt daher die Aufgabe zugrunde, einen Spreizdübel der gattungsgemäßen Art zu schaffen, dessen Spreiz-Konus einen geringeren Materialeinsatz als ein Spreiz-Konus aus Zink-Druckguß bei mindestens gleich hoher Festigkeit des Innen-Gewindes erfordert.

Diese Aufgabe wird erfindungsgemäß durch die Merkmale im Kennzeichnungsteil des Anspruches 1 gelöst. Da der Spreiz-Konus aus Blech hergestellt wird, weist er im Vergleich zu einem massiven Spreiz-Konus aus Zink-Druckguß ein verhältnismäßig geringes Volumen auf. Er kann also aus Stahlblech gefertigt werden. Trotzdem ist sein Gewicht niedriger. Weiterhin ist Stahl erheblich billiger als Zink, so daß die Kosten besonders stark sinken. Darüberhinaus ist die Festigkeit von Stahl erheblich höher als die von Zink. Durch die Verbindung im Bereich der Stoßfuge wird sichergestellt, daß ein Verziehen des Spreiz-Konus oder ein Ineinanderrutschen der Wandbereiche des Spreiz-Konus an der Stoßfuge vermieden wird.

Insbesondere durch die Maßnahmen nach Anspruch 2 und die Weiterbildung der dort angegebenen Verriegelung nach Anspruch 3 wird erreicht, daß einerseits der Spreiz-Konus in einem einzigen Stanz-Präge-Vorgang und einem anschließenden Biegevorgang hergestellt werden kann, wobei gleichzeitig die Verbindung im Bereich der Stoßfuge hergestellt wird.

Durch die Weiterbildung nach Anspruch 4 wird erreicht, daß das Gewinde, das ebenfalls vor dem Biegen des Spreiz-Konus spanlos hergestellt werden kann, nicht durch Verziehen des Spreiz-Konus unbrauchbar werden kann, da es sich in dem Bereich befindet, der durch die Verriegelung in sich völlig starr ausgebildet ist.

Durch die Weiterbildung nach Anspruch 5 wird sichergestellt, daß das Innengewinde nicht dadurch unbrauchbar wird, daß im Bereich der Stoßfuge Fluchtungsungenauigkeiten auftreten. Dem dient auch die Weiterbildung nach Anspruch 6, wobei diese zusätzlich bewirkt, daß nicht der zur Verriegelung dienende Vorsprung nach dem Stanzen beim Einprägen des Innengewindes verformt wird, wodurch die Genauigkeit des Formschlusses der Verriegelung beeinträchtigt werden könnte.

Durch die Maßnahmen nach Anspruch 7 und Anspruch 8 wird erreicht, daß das Innengewinde durch Prägen aus der Innenseite der Wand des Spreiz-Konus spanlos ausgeformt werden kann.

Durch die Maßnahme nach Anspruch 9 wird sichergestellt, daß der durch hohe Radialkräfte beaufschlagte Spreizabschnitt nicht gleichzeitig Ort der Verriegelung ist. Die Ansprüche 10 und 11 geben Maßnahmen an, durch die ohne nennenswerten Zusatzaufwand an dem aus Blech bestehenden Spreiz-Konus eine Verdrehsicherung und eine Verliersicherung jeweils relativ zur Spreiz-Hülse geschaffen werden. Anspruch 12 gibt eine weitere Ausbildung des Spreiz-Konus an.

Weitere Merkmale, Vorteile und Einzelheiten der Erfindung ergeben sich aus der nachfolgenden Beschreibung eines Ausführungsbeispieles der Erfindung. Es zeigt
- Fig. 1: einen aus Spreiz-Hülse, Spreiz-Schraube und Spreiz-Konus bestehenden Spreizdubel in einer Längs-Draufsicht
- Fig. 2: den Spreiz-Konus des Spreizdübels in stark vergrößerter Darstellung in einer teilweise aufgebrochenen Längs-Draufsicht und
- Fig. 3: eine Stirnansicht des Spreiz-Konus entsprechend dem Sichtpfeil III in Figur 2.

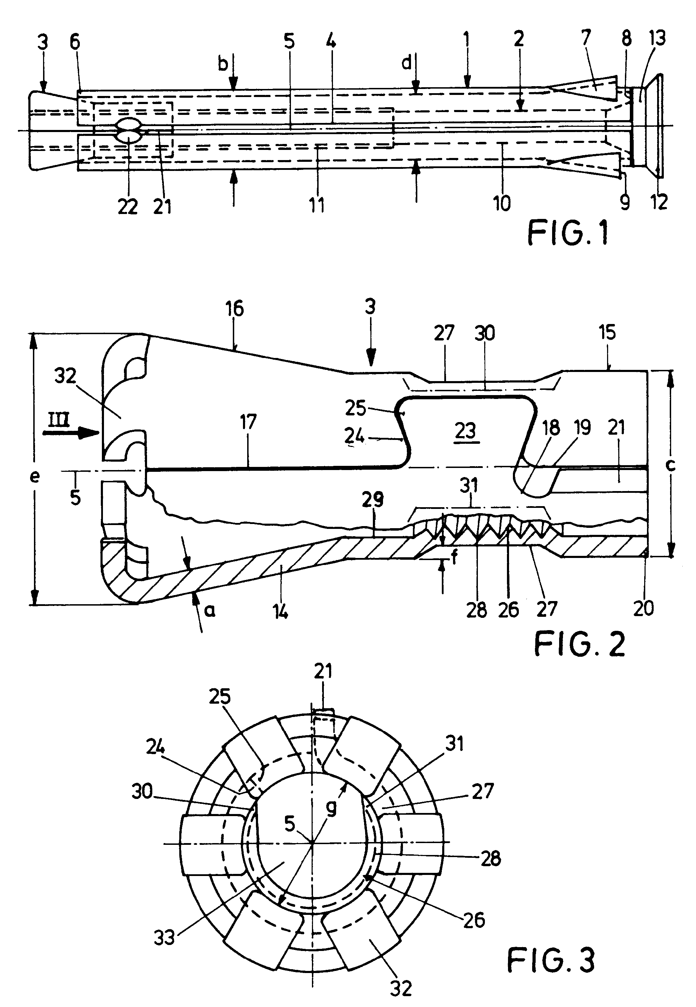

Der in Figur 1 dargestellte Spreizdübel besteht aus drei Teilen, nämlich einer Spreiz-Hülse 1, einer Spreiz-Schraube 2 und einem Spreiz-Konus 3. Spreiz-Hülse 1 und Spreiz-Schraube 2 sind in üblicher Weise ausgestaltet.

Die Spreiz-Hülse 1 ist zylindrisch ausgebildet und aus Blech gebogen. Sie weist einen sich über die volle Länge der Hülse 1 erstreckenden Schlitz 4 auf, der parallel zur Mittel-Längs-Achse 5 verläuft. Darüber hinaus weist sie mindestens im Bereich ihres EinschubEndes 6, also dort, wo sich der Spreiz-Konus 3 befindet, ein oder mehrerere zusätzliche, in der Zeichnung nicht erkennbare Schlitze auf. Auch im Bereich des dem Einschub-Endes 6 entgegengesetzten Endes können noch ein oder mehrere Schlitze vorgesehen sein. Dort befinden sich auch mehrere aus der Spreiz-Hülse herausgeformte Vorsprünge 7, die zur Verankerung der SpreizHülse im Mauerwerk, Beton oder dergleichen dienen können, oder deren dem benachbarten Rand 8 der Hülse 1 zugewandte Stirnflächen als Auflageflächen 9 für am Mauerwerk, Beton oder dergleichen zu befestigende Gegenstände, wie beispielsweise Metallrahmen oder dergleichen, insbesondere Fensterrahmen oder Türrahmen, dienen.

Die Spreiz-Schraube 2 weist einen zylindrischen Bolzen 10 auf, der zumindest über einen Teil seiner Länge mit einem Außengewinde 11 versehen ist, das in den SpreizKonus 3 hineingeschraubt wird. Die Schraube 2 weist weiterhin einen Kopf 12 auf, der mit einem dem Bolzen 10 zugewandten Ringbund 13 versehen ist, der gegen den Rand 8 der Hülse 1 anliegt, so daß eine lagegenaue Abstützung des Kopfes 12 der Schraube 2 gegen die Hülse 1 erreicht ist. Bei Anziehen der Spreiz-Schraube 2 wird somit der Spreiz-Konus 3 in das Einschub-Ende 6 der Hülse 1 hineingezogen und weitet diese auf. Insoweit als der Spreizdübel bis jetzt beschrieben ist, ist er allgemein bekannt und in der Praxis bewährt.

Der Spreiz-Konus 3 ist ebenfalls bevorzugt aus Stahlblech gebogen, er weist also eine Wand 14 auf, deren Dicke a etwa überall gleich ist und 5 bis 10 %, bevorzugt 7 bis 9 % des Außendurchmessers b der Spreiz-Hülse 1 beträgt.

Der Konus 3 weist einen zylindrischen Abschnitt 15 auf, dessen Außendurchmesser c etwas kleiner ist als der Innendurchmesser d der Spreiz-Hülse 1. Die Differenz dieser beiden Durchmesser c und d soll höchstens ein bis wenige Zehntel Millimeter betragen, um ein Einführen dieses zylindrischen Abschnitts 15 bei der Montage des Konus 3 in der Hülse 1 vom Einschub-Ende 6 her zu ermöglichen. Ein nicht notwendiges Spiel sollte nicht vorhanden sein. An den zylindrischen Abschnitt 15 schließt sich ein konusförmiger, d. h. kegelstumpfförmiger Abschnitt 16 an, dessen Außendurchmesser sich vom Außendurchmesser c des zylindrischen Abschnitts 15 bis zu einem Außendurchmesser e erweitert, der etwa gleich aber nicht größer ist als der Außendurchmesser b der Hülse 1, so daß der Spreiz-Konus 3 in unverspreiztem Zustand der Hülse 1 nicht radial über diese vorsteht. Dieser kegelstumpfförmige Abschnitt 16 ist also ein Spreizabschnitt des Spreiz-Konus 3. Da der Spreiz-Konus 3 aus Blech gebogen ist, weist er eine Stoßfuge 17 auf, die von zwei Kanten 18, 19 der Wand 14 begrenzt bzw. gebildet wird. Im Bereich des freien Endes 20 des zylindrischen Abschnitts 15 ist von der einen Kante 18 der Wand 14 ein Lappen oder eine Fahne radial zur Achse 5 nach außen gebogen, wodurch ein Anschlag 21 gebildet wird. Dieser Anschlag 21 wird bei der Montage des Konus 3 der Hülse 1 in den Schlitz 4 oder einen anderen der erwähnten Schlitze eingeführt und über mindestens einen Vorsprung 22 hinweggeschoben, der aus dem Material der Hülse 1 durch lokales Verquetschen erzeugt ist und in den Schlitz 4 hineinragt. Bei montiertem Konus 3 aber noch nicht gespreizter Hülse 1 liegt dieser Vorsprung 22 - wie Figur 1 erkennen läßt - auf der dem Einschub-Ende 6 abgewandten Seite des mindestens einen Vorsprungs 22, so daß der Konus 3 verliersicher in der Hülse 1 gehalten ist, auch wenn er nicht durch die Schraube 2 in der Hülse 1 gehalten wird. Gegen ein Hineinrutschen des Konus 3 in die Hülse 1 ist ersterer durch seinen kegelstumpfförmigen Abschnitt 16 gesichert. Außerdem wird durch den im Schlitz 4 verschiebbaren Anschlag 21 eine Verdrehsicherung für den Spreiz-Konus 3 relativ zur Spreiz-Hülse 4 geschaffen, da nur bei einer solchen relativen Unverdrehbarkeit gegeneinander der Spreiz-Konus 3 bei Verdrehen der Schraube 2 gegenüber der Hülse 1 der Konus 3 in die Hülse 1 hineingezogen werden kann.

Zwischen dem Anschlag 21 und dem kegelstumpfförmigen Abschnitt 16 ist im zylindrischen Abschnitt 15 eine Verriegelung 23 der beiden Kanten 18, 19, also der Wand 14 im Bereich ihrer Stoßfuge 17 vorgesehen. Diese Verriegelung 23 besteht aus einem schwalbenschwanzförmigen hinterschnittenen Ausschnitt 24 im Bereich der Kante 19 und einem im Querschnitt angepaßten, also ebenfalls schwalbenschwanzförmig hinterschnittenen Vorsprung 25, der formschlüssig und spielfrei in den Ausschnitt 24 hineingreift. Hierdurch ist ein Öffnen des Spreiz-Konus 3 radial zur Achse 5 und tangential zu seinem Umfang ausgeschlossen. Weiterhin ist eine axiale Verwindung des Konus 3 durch Längsverschieben der Kanten 18, 19 gegeneinander in Richtung der Achse 5 ausgeschlossen.

Im Bereich dieser Verriegelung 23 ist ein Innengewinde 26 ausgebildet, das zur Aufnahme des Außengewindes 11 der Schraube 2 dient. Zur Aufnahme dieses Innengewindes 26 ist die Wand 14 des Konus 3 mit einer sich über die axiale Erstreckung des Innengewindes 26 erstrekkende Einschnürung 27 versehen, deren Tiefe f kleiner als die Dicke a der Wand 14, aber größer als die halbe Dicke a/2 ist. Die Tiefe f dieser Einschnürung 27 ist auf jeden Ball so groß, daß der jeweilige Gewindegrund 28 des Innengewindes 26 radial innerhalb der Innenseite 29 der Wand 14 im zylindrischen Abschnitt 15 liegt, so daß der Bolzen 10 mit dem Außengewinde 11 durch den zylindrischen Abschnitt 15 eingeführt werden kann. Andererseits muß für die Ausbildung des Innengewindes 26 genügend Material in der Wand 14 zur Verfügung stehen. Hierzu sei angemerkt, daß das Innengewinde 26 spanlos durch Prägen oder dergleichen, d. h. also durch eine Fließverformung des Bleches in diesem Bereich erzeugt wird.

Die Einschnürung 27 und damit das Innengewinde 26 erstreckt sich nicht über den gesamten Innenumfang des zylindrischen Abschnitts 15 des Spreiz-Konus 3, sondern - wie in den Figuren 2 und 3 angedeutet ist - nur über einen Bereich von etwa 250° bis 270°. Sie läuft in zwei Auslaufzonen 30, 31 in die Wand 14 aus und zwar vor den jeweils zugeordneten Kanten 18, 19. Dies bedeutet, daß die Einschnürung 27 und damit das Innengewinde 26 vor der dem Grund des Ausschnittes 24 Zugeordneten Kante 19 und vor der dem Anschlag 21 zugeordneten Kante 18 ausläuft. In der Verriegelung 23, d. h. insbesondere in dem Vorsprung 25 ist also kein Innengewinde ausgebildet. Durch diese Ausgestaltung wird sichergestellt, daß das Innengewinde 26 einen Verlauf hat, der exakt dem des Außengewindes 11 entspricht. Da das Innengewinde 26 vor dem Zusammenbiegen des SpreizKonus 3 spanlos geformt wird, würden axiale Flucht-Ungenauigkeiten der Gewinde an der Stoßstelle dazu führen, daß die Schraube 2 mit Ihrem Außengewinde 11 nicht mehr eingeschraubt werden könnte. Darüber hinaus ist durch die Verriegelung 23 sichergestellt, daß gerade in diesem Bereich nach dem Zusammenbiegen des Konus 3 aus dem gestanzten Blechzuschnitt die Gewindegänge des Innengewindes 26 einen sehr exakten Verlauf zueinander haben, der aus den oben bereits geschilderten Gründen auch exakt erhalten bleibt. Falls es im Einzelfall notwendig sein sollte, kann die Verriegelung 23 durch einen Schweißpunkt, also ohne Fremdmaterialzuführung beim Schweißen noch zusätzlich gesichert werden; in der Regel wird dies aber nicht erforderlich sein.

Wie Figur 3 in Verbindung mit Figur 2 und der obigen Beschreibung entnehmbar ist, ist der Innenradius des zylindrischen Abschnitts 15 im Bereich zwischen den Auslaufzonen 30, 31 größer als der Außendurchmesser des Außengewindes 11, so daß dieses hier nicht die Wand 14 berührt.

Am außerhalb der Spreiz-Hülse 1 liegenden Ende des kegelstumpfförmigen Abschnitts 16 sind radial nach innen, also zur Achse 5 hin, gebogene Zungen 32 vorgesehen, die eine stirnseitige Öffnung 33 des Konus 3 begrenzen, deren Durchmesser g etwa dem Außendurchmesser des Außengewindes 11 der Schraube 2 entspricht, so daß beim Einziehen des Konus 3 in die Hülse 1 der Konus 3 hier noch einmal zusätzlich gegenüber dem Bolzen 10 der Schraube 2 zentriert wird, wenn diese die Öffnung 33 durchdringt.

## Patentansprüche

1. Spreizdübel, bestehend aus einer zumindest über einen Teil ihrer Länge mit mindestens einem Schlitz (4) versehenen Spreiz-Hülse (1), einer konzentrisch zu einer gemeinsamen Mittel-Längs-Achse (5) hierin angeordneten und sich mit einem Kopf (12) an einem Rand (8) der Spreiz-Hülse (1) gegen diese abstützenden Spreiz-Schraube und einem an einem dem Rand (8) entgegengesetzt liegenden Einschub-Ende (6) der Spreiz-Hülse (1) unverdrehbar gegenüber dieser gehaltenen und axial in dieser verschiebbaren Spreiz-Konus (3), der ein Innengewinde (26) zur Aufnahme eines Außengewindes (11) der Spreiz-Schraube (2) und einen Spreizabschnitt (kegelstumpfförmiger Abschnitt 16) zum Aufspreizen des dem Einschub-Ende (6) zugeordneten Bereichs der Spreiz-Hülse (1) beim Hineinziehen dieses Spreizabschnitts mittels der Spreiz-Schraube (2) in die Spreiz-Hülse (1) aufweist, dadurch gekennzeichnet, daß der Spreiz-Konus (3) aus Blech mit nur einer Stoßfuge (17) gebogen ist, daß die die Stoßfuge (17) begrenzenden Kanten (18, 19) seiner Wand (14) in Richtung der Mittel-Längs-Achse (5) und tangential hierzu fest miteinander verbunden sind und daß das Innengewinde (26) im Bleich ausgebildet ist.

2. Spreizdübel nach Anspruch 1, dadurch gekennzeichnet, daß die Kanten (18, 19) mittels einer Verriegelung (23) formschlüssig miteinander verbunden sind.

3. Spreizdübel nach Anspruch 2, dadurch gekennzeichnet, daß die Verriegelung (23) durch einen in einen einer Kante (19) zugeordneten hinterschnittenen Ausschnitt (24) formschlüssig eingreifenden, der anderen Kante (18) zugeordneten Vorsprung (25) gebildet ist.

4. Spreizdübel nach Anspruch 2, dadurch gekennzeichnet, daß das Innengewinde (26) im Bereich der Verriegelung (23) angeordnet ist.

5. Spreizdübel nach einem der Ansprüche 1 bis 4, dadurch gekennzeichnet, daß das Innengewinde (26) sich nur über einen Teilumfang des Spreiz-Konus (3) erstreckt, wobei die Bereiche der die Stoßfuge (17) begrenzenden Kanten (18, 19) gewindefrei ausgebildet sind.

6. Spreizdübel nach Anspruch 4 und 5, dadurch gekennzeichnet, daß das Innengewinde (26) sich nicht über die Verriegelung (23) erstreckt.

7. Spreizdübel nach einem der Ansprüche 1 bis 6, dadurch gekennzeichnet, daß das Innengewinde (26) in einer Einschnürung (27) in der Wand (14) des Spreiz-Konus (3) ausgebildet ist.

8. Spreizdübel nach Anspruch 5 und 7, dadurch gekennzeichnet, daß die Einschnürung (27) sich etwa über den Umfangsbereich des Innengewindes (26) erstreckt.

9. Spreizdübel nach einem der Ansprüche 2 bis 8, dadurch gekennzeichnet, daß der Spreiz-Konus (3) außer dem Spreizabschnitt (kegelstumpfförmiger Abschnitt 16) einen sich an diesen anschließenden zylindrischen Abschnitt (15) aufweist, an dem die Verriegelung (23) ausgebildet ist.

10. Spreizdübel nach einem der Ansprüche 1 bis 9, dadurch gekennzeichnet, daß von einer der die Stoßfuge (17) begrenzenden Kanten (18) ein in einen Schlitz (4) der Spreiz-Hülse (1) ragender, als Verdrehsicherung gegenüber letzterer dienender Anschlag (21) bezogen auf die Mittel-Längs-Achse (5) radial nach außen gebogen ist.

11. Spreizdübel nach Anspruch 10, dadurch gekennzeichnet, daß der Anschlag (21) zur Bildung einer Verliersicherung zwischen Spreiz-Hülse (1) und Spreiz-Konus (3) hinter mindestens einem in den Schlitz (4) ragenden, an der Spreiz-Hülse (1) ausgebildeten Vorsprung (22) angeordnet ist.

12. Spreizdübel nach einem der Ansprüche 1 bis 11, dadurch gekennzeichnet, daß am freien Ende des Spreizabschnittes (kegelstumpfförmiger Abschnitt 16) radial nach innen zur Mittel-Längs-Achse (5) hin gebogene Zungen (32) ausgebildet sind, die eine Zentrier-Öffnung (33) für die Spreiz-Schraube (2) begrenzen.

## Claims

1. An expanding plug comprising an expanding sleeve (1) provided at least over part of its length with at least one slot (4), an expanding screw (2) arranged in the expanding sleeve (1) concentrically to a common central longitudinal axis (5) and bearing against the expanding sleeve (1) with a head (12) on a rim (8) of the latter, and an expanding cone (3) held safe from twisting relative to the expanding sleeve (1) at a plug-in end (6) of the expanding sleeve (1) opposite the rim (8) and axially slidable in the expanding sleeve (1), which expanding cone (3) has an internal thread (26) to take up an external thread (11) of the expanding screw (2) and an expanding section (frusto-conical section 16) for expanding the area of the expanding sleeve (1) associated with the plug-in end (6) when this expanding section is pulled into the expanding sleeve (1) by means of the expanding screw (2), characterized in that the expanding cone (3) is bent from metal sheet with only one joint gap (17), that the edges (18, 19) of its wall (14) limiting the joint gap (17) are tightly connected with each other in the direction of the central longitudinal axis (5) and tangentially to it and that the internal thread (26) is formed in the metal sheet.

2. An expanding plug according to claim 1, characterized in that the edges (18, 19) are positively connected with each other by means of an interlocking (23).

3. An expanding plug according to claim 2, characterized in that the interlocking (23) is formed by a projection (25) positively engaging with a cut-out recess (24) associated with an edge (19), which projection (25) is associated with the other edge (18).

4. An expanding plug according to claim 2, characterized in that the internal thread (26) is arranged in the vicinity of the interlocking (23).

5. An expanding plug according to one of the claims 1 to 4, characterized in that the internal thread (26) extends only over part of the circumference of the expanding cone (3), with the areas of the edges (18, 19) limiting the joint gap (17) being provided without any thread.

6. An expanding plug according to claim 4 and 5, characterized in that the internal thread (26) does not extend over the interlocking (23).

7. An expanding plug according to one of the claims 1 to 6, characterized in that the internal thread (26) is provided in a narrowing (27) in the wall (14) of the expanding cone (3).

8. An expanding plug according to claim 5 and 7, characterized in that the narrowing (27) extends approximately over the circumferential area of the internal thread (26).

9. An expanding plug according to one of the claims 2 to 8, characterized in that in addition to the expanding section (frusto-conical section 16) the expanding cone (3) has a contiguous cylindrical section (15) where the interlocking (23) is provided.

10. An expanding plug according to one of the claims 1 to 9, characterized in that an abutment (21) protruding into a slot (4) of the expanding sleeve (1) and serving as a safety device to prevent any twisting relative to the expanding sleeve (1) is bent radially outwards relative to the central longitudinal axis (5) from an edge (18) limiting the joint gap (17).

11. An expanding plug according to claim 10, characterized in that the abutment (21) is arranged behind at least one projection (22) protruding into the slot (4) and provided on the expanding sleeve (1) to form a safety device to prevent loss between the expanding sleeve (1) and the expanding cone (3).

12. An expanding plug according to one of the claims 1 to 11, characterized in that at the free end of the expanding section (frusto-conical section 16) tongues (32) bent radially inwards towards the central longitudinal axis (5) are provided which limit a centring opening (33) for the expanding screw (2).

## Revendications

1. Cheville expansible, comprenant une douille expansible (1) qui est pourvue d'au moins une fente (4) sur une partie de sa longueur, une vis d'expansion (2) qui est disposée à l'intérieur de ladite douille expansible (1) concentriquement à un axe longitudinal médian commun (5) et dont la tête (12) est appliquée contre le bord (8) de la douille expansible (1), et un cône d'expansion (3) qui est monté à l'extrémité d'introduction (6) de la douille expansible (1), de manière non rotative et coulissante axialement par rapport à cette dernière, ladite extrémité d'introduction (6) étant située à l'opposé du bord (8), et qui comporte un filet intérieur (26), destiné à recevoir le filet extérieur (11) de la vis d'expansion (2), et un segment d'expansion (segment tronconique (16)) pour écarter la zone de la douille expansible (1) tournée vers l'extrémité d'introduction (6) lors de la pénétration de ce segment d'expansion dans la douille expansible (1) au moyen de la vis d'expansion (2), caractérisée en ce que le cône d'expansion (3) est en tôle pliée et ne comporte qu'un seul joint (17), en ce que les arêtes (18, 19) de sa paroi (14) qui délimitent le joint (17) sont solidarisées l'une à l'autre dans le sens de l'axe longitudinal médian (5) et tangentiellement à celui-ci, et en ce que le filet intérieur (26) est réalisé dans la tôle.

2. Cheville expansible selon la revendication 1, caractérisée en ce que les arêtes (18, 19) sont reliées entre elles mécaniquement au moyen d'un dispositif de verrouillage (23).

3. Cheville expansible selon la revendication 2, caractérisée en ce que le dispositif de verrouillage (23) est formé par une saillie (25) qui correspond à l'arête (18) et qui s'emboîte mécaniquement dans une découpe (24) avec décrochement correspondant à l'autre arête (19).

4. Cheville expansible selon la revendication 2, caractérisée en ce que le filet intérieur (26) se trouve dans la zone du dispositif de verrouillage (23).

5. Cheville expansible selon l'une des revendications 1 à 4, caractérisée en ce que le filet intérieur (26) ne s'étend que sur une partie de la circonférence du cône d'expansion (3), les zones des arêtes (18, 19) délimitant le joint (17) étant dépourvues de filet.

6. Cheville expansible selon les revendications 4 et 5, caractérisée en ce que le filet intérieur (26) ne s'étend pas sur le dispositif de verrouillage (23).

7. Cheville expansible selon l'une des revendications 1 à 6, caractérisée en ce que le filet intérieur (26) est réalisé dans un rétrécissement (27) de la paroi (14) du cône d'expansion (3).

8. Cheville expansible selon les revendications 5 et 7, caractérisée en ce que le rétrécissement (27) s'étend sensiblement sur la zone circonférentielle du filet intérieur (26).

9. Cheville expansible selon l'une des revendications 2 à 8, caractérisée en ce que, en dehors du segment d'expansion (segment tronconique 16), le cône d'expansion (3) comporte un segment cylindrique (15) qui prolonge ledit segment d'expansion et sur lequel est réalisé le dispositif de verrouillage (23).

10. Cheville expansible selon l'une des revendications 1 à 9, caractérisée en ce qu'une butée (21), qui dépasse dans une fente (4) de la douille expansible (1) et qui sert de blocage en rotation par rapport à cette dernière, est repliée vers l'extérieur, radialement par rapport à l'axe longitudinal médian (5), à partir de l'une des arêtes (18) délimitant le joint (17).

11. Cheville expansible selon la revendication 10, caractérisée en ce que, pour former un blocage à demeure entre la douille expansible (1) et le cône d'expansion (3), la butée (21) est logée derrière au moins une saillie (22) qui déborde dans la fente (4) et qui est disposée sur la douille expansible (1).

12. Cheville expansible selon l'une des revendications 1 à 11, caractérisée en ce que, à l'extrémité libre du segment d'expansion (segment tronconique (16)) sont prévues des languettes (32) qui sont pliées radialement vers l'intérieur en direction de l'axe longitudinal médian (5) et qui délimitent une ouverture de centrage (33) pour la vis d'expansion (2).
